**Europäisches Patentamt**

(19) **European Patent Office**

**Office européen des brevets**

(11) Veröffentlichungsnummer: **0 052 077**
**B1**

(12) **EUROPÄISCHE PATENTSCHRIFT**

(45) Veröffentlichungstag der Patentschrift:
**16.01.85**

(51) Int. Cl.⁴: **B 21 K 1/06,** F 16 C 3/02

(21) Anmeldenummer: **81810445.7**

(22) Anmeldetag: **06.11.81**

(54) Verfahren zur Herstellung einer rotationssymmetrischen Hohlwelle.

(30) Priorität: **06.11.80 CH 8243/80**

(43) Veröffentlichungstag der Anmeldung:
**19.05.82 Patentblatt 82/20**

(45) Bekanntmachung des Hinweises auf die Patenterteilung:
**16.01.85 Patentblatt 85/3**

(84) Benannte Vertragsstaaten:
**AT BE DE FR GB IT LU NL SE**

(56) Entgegenhaltungen:
**BE - A - 457 542**
**DE - A - 2 805 729**
**US - A - 2 569 248**
**US - A - 2 752 673**
**US - A - 3 886 649**

(73) Patentinhaber: **LANZ INDUSTRIE-TECHNIK AG,**
**Hauptstrasse 417, CH-4853 Murgenthal (CH)**

(72) Erfinder: **Schlatter, Walter, Wiesengasse 69,**
**FL-9494 Schaan (LI)**

(74) Vertreter: **Gasser, François W.,**
**Hirschengraben 10 Postfach 1555, CH-3001 Bern (CH)**

EP 0 052 077 B1

## Beschreibung

Die vorliegende Erfindung betrifft ein Verfahren zur Herstellung einer rotationssymmetrischen Hohlwelle nach dem Oberbegriff des Patentanspruchs.

Im Maschinen-, Motoren- und Getriebebau werden normalerweise Vollwellen benützt. Im Flugzeugmotorenbau, wo das Leistungsgewicht eine sehr grosse Rolle spielt, ist man schon frühzeitig zu ausgedrehten Hohlwellen übergegangen, beispielsweise bei den bekannten Hirtmotoren, wobei die ausgedrehten Hohlwellenteile durch Verschraubung verbunden wurden. Es liegt aber auf der Hand, derartige Wellenteile auch zusammenzuschweissen, um sie anschliessend zu vergüten.

Es ist ferner bekannt, rotationssymmetrische Gebilde, beispielsweise in Form einseitig offener Wellen, durch Kaltfliesspressen herzustellen, ein Verfahren, welches nicht nur sehr genau ist und daher nur geringe Bearbeitungszugaben verlangt, sondern zudem relativ billig. Auch erlaubt es eine Formgebung der Hohlräume, welche gefährliche Spannungskonzentrationen und Spannungsspitzen durch entsprechend feine Übergänge bei Durchmesseränderungen vermeidet.

Die US-Patentschrift 3 886 649 zum Beispiel weist auf die Möglichkeit hin, kaltgeformte oder kaltfliessgepresste Wellenteile zusammenzuschweissen und somit leichtgewichtige Hohlwellen herzustellen.

Es besteht insbesondere im Maschinen-, Motoren- und Getriebebau die Nachfrage nach gewichtsmässig leichten, leicht herzustellenden, festigkeitsmässig jedoch sicheren Wellen, insbesondere auch von Wellen, welche gegen ihre Enden hin im Durchmesser kleiner werden und bei welchen der Totalmaterialeinsatz nicht zu einem merklichen Teil in wertlosen Drehspänen oder dergleichen anfällt.

Die Aufgabe der vorliegenden Erfindung ist es daher, ein Verfahren anzubieten, welches unter Verwendung der Kaltfliesspress- und Reibschweiss-Verfahren das wirtschaftliche Herstellen solcher Hohlwellen ermöglicht.

Erfindungsgemäss wird diese Aufgabe durch ein Verfahren gemäss dem einzigen Anspruch gelöst.

Folgende Vorteile ergeben sich aus dem erfindungsgemässen Verfahren:

1. Gewichtseinsparung durch Anbringen eines in sich geschlossenen Hohlraumes im Inneren von bisherigen vollen Wellen.

2. Herstellungsverfahren durch

a) Fliesspressen von zwei oder mehreren Teilen mit einseitigen Hohlräumen,

b) Zusammenfügen der Teile nach a) durch Reibschweissen

3. Möglichkeit der rationellen Formgebung des Hohlraumes beim Fliesspressen mit den Vorteilen:

Die Form des Hohlraumes kann im wesentlichen der Aussenform folgen und ergibt dadurch optimale Gewichtseinsparung bei optimalen geometrischen Formen für polare und axiale Trägheitsmomente, geringste Einbusse an Verdreh- und Biegefestigkeit.

Günstige Übergänge bei Durchmesserwechsel und dadurch Vermeidung von Kerbwirkung.

Ununterbrochener Faserverlauf längs des Teiles über alle Stufen hinweg.

Die Erfindung wird anschliessend anhand von Formbeispielen und den Zeichnungen erläutert.

Es zeigen jeweils in Längsschnitten durch die Drehachsen:

Fig. 1 zwei Hälften einer beidseitig sich nach den Enden hin verjüngenden, abgesetzten Hohlwelle, welche durch Fliesspressen hergestellt sind,

Fig. 2 die beiden Hohlwellenteile nach Fig. 1, nach dem Zusammenschweissen mittels Reibschweissung,

Fig. 3 zwei andere Wellenteile nach dem Fliesspressen vor dem Reibschweissen,

Fig. 4 die Welle nach dem Verbinden der beiden Teile nach Fig. 3 durch Reibschweissung,

Fig. 5 eine Ansicht der Hohlwelle nach Fig. 2,

Fig. 6 eine weitere Ansicht einer Hohlwelle, deren dünnere Partie zwischen zwei grösseren Durchmessern liegt, C = Materialabfall, wenn Welle fliessgepresst,

Fig. 7 eine Ansicht einer Hohlwelle bekannter Ausführung, mit grösstem Durchmesser am einen Ende,

Fig. 8 ein Längsschnitt der Welle nach Fig. 7.

Fig. 9 und 10 Wellenhälften, als Hohlkörper fliessgepresst, vorbereitet für Verbindung zu einer Welle nach Fig. 8,

Fig. 11 eine Ansicht einer Hohlwelle mit zwei abgesetzten Partien zwischen grösseren Durchmessern, C = Materialabfall, wenn Welle fliessgepresst,

Fig. 12 ein Längsschnitt der Welle analog Fig. 11.

Fig. 13, 14 und 15 Wellenteile als Hohlkörper fliessgepresst, vorbereitet für eine Verbindung zu einer Welle nach Fig. 12,

Fig. 16 eine weitere Ansicht einer Hohlwelle mit unterschiedlichen Durchmessern,

Fig. 17 und 18 fliessgepresste Hohlkörper-Wellenteile als Bestandteile der in Fig. 16 gezeigten Welle,

Fig. 19 Längsschnitt der Hohlwelle nach Fig. 16,

Fig. 20 eine andere Ansicht einer Hohlwelle,

Fig. 21 und 22 die fliessgepressten Hohlkörper-Wellenteile, als Bestandteile der in Fig. 20 gezeigten Welle,

Fig. 23 Längsschnitt der Hohlwelle nach Fig. 20,

Fig. 24 eine letzte Ansicht einer Hohlwelle,

Fig. 25 und 26 die Hohlkörper-Wellenteile als Bestandteile der in Fig. 24 gezeigten Welle,

Fig. 27 Längsschnitt der Hohlwelle nach Fig. 24.

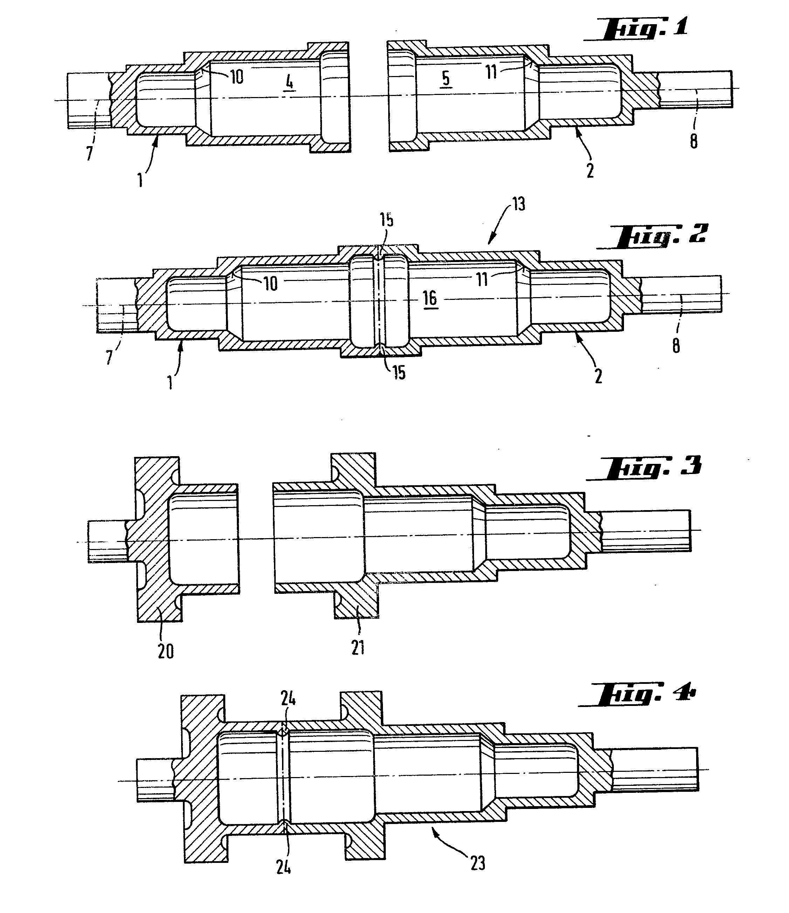

In Fig. 1 sind zwei Hohlwellenteile 1 und 2 ersichtlich, mit Hohlräumen 4 und 5 und Drehachsen 7 und 8. Die Hohlräume 4 und 5 sind durch Stufen 10 und 11 abgesetzt. Die beiden Hohlwellenteile 1 und 2 sind auf bekannte Art durch Fliesspressen hergestellt. Die Genauigkeit dieser Teile ist sehr gross und die Materialzugabe daher für die Fertigbearbeitung klein. Die Hohlräume 4 und 5 sind bezüglich Drehachsen 7 und 8 sehr genau symmetrisch. Die beiden Hohlwellenteile 1 und 2 sind durch Reibschweissung, ein ebenfalls in den letztenJahren bekanntgewordenes Verfahren, zu einer Welle 13 vereinigt. Die Reibschweissnaht 15 ist in Fig. 2 dargestellt und der Gesamthohlraum 16, normalerweise Flüssigkeits- oder gasdicht, ergibt eine wesentliche Gewichtsersparnis bzw. Materialersparnis gegenüber bekannten derartigen Wellen. Natürlich entsprechen die Wanddicken den mechanischen und thermischen Beanspruchungen.

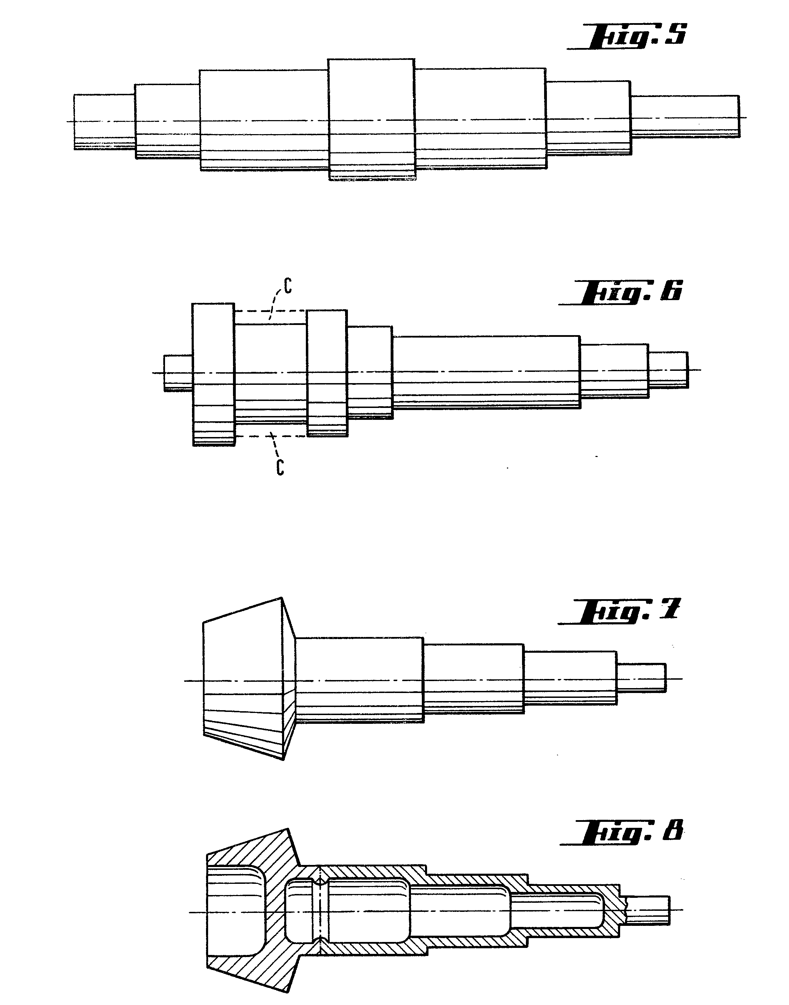

Ein anderes Ausführungsbeispiel, bei welchem die zwei Wellenteile 20 und 21 nicht symmetrisch ausgebildet sind, zeigt Fig. 3, während Fig. 4 die fertige Welle 23 mit der Reibschweissnaht 24 veranschaulicht.

Solche Hohlwellen sind bis zu 50% leichter als festigkeitsmässig gleichwertige Vollwellen.

Die vorliegende Erfindung ist insbesondere interessant, weil sie gestattet, durch Fliesspressen auch Wellen herzustellen, welche bezüglich Durchmesser gegen ihre Enden oder gegen eines ihrer Enden hin stark verjüngt sind, was das Einbringen von Hohlräumen in anderer Weise äusserst schwierig gestaltet.

Es hat sich gezeigt, dass ausschliesslich im Fliesspressverfahren derartige Hohlteile mit so grosser Genauigkeit wirtschaftlich hergestellt werden können, dass am fertigen Teil keine untolerierbaren Verschiebungen der Schwerpunktslage entstehen. Die normalerweise hermetisch nach aussen abgeschlossenen Innenräume geben die Sicherheit, dass keine Verunreinigungen, wie Zunderteile, Abbrandteile u.dgl. im späteren Betrieb in die Maschine bzw. den Motor oder das Getriebe gelangen können.

Der Raum kann sich auch nicht von aussen mit Öl füllen, was auch bezüglich einzufüllender Ölmenge einen Vorteil bietet.

Das durch Fliesspressen wegen des Hohlraumes eingesparte Materialvolumen ergibt eine sehr wesentliche Reduktion des Materialeinsatzes und damit eine entsprechende Verbilligung des ganzen Teiles.

Wie die Figuren 3 und 4 zeigen, erlaubt das beschriebene Verfahren auch die Herstellung von Wellen, welche zwei Abschnitte mit grösseren Durchmessern und dazwischenliegendem Abschnitt mit kleinerem Durchmesser aufweisen. Diese relativ häufige Wellenform kann im Kaltfliess-Pressverfahren nur mit erheblicher Materialanhäufung an der Stelle der Verdünnung hergestellt werden. Das neue Verfahren erlaubt es, diesen Nachteil auszuschalten.

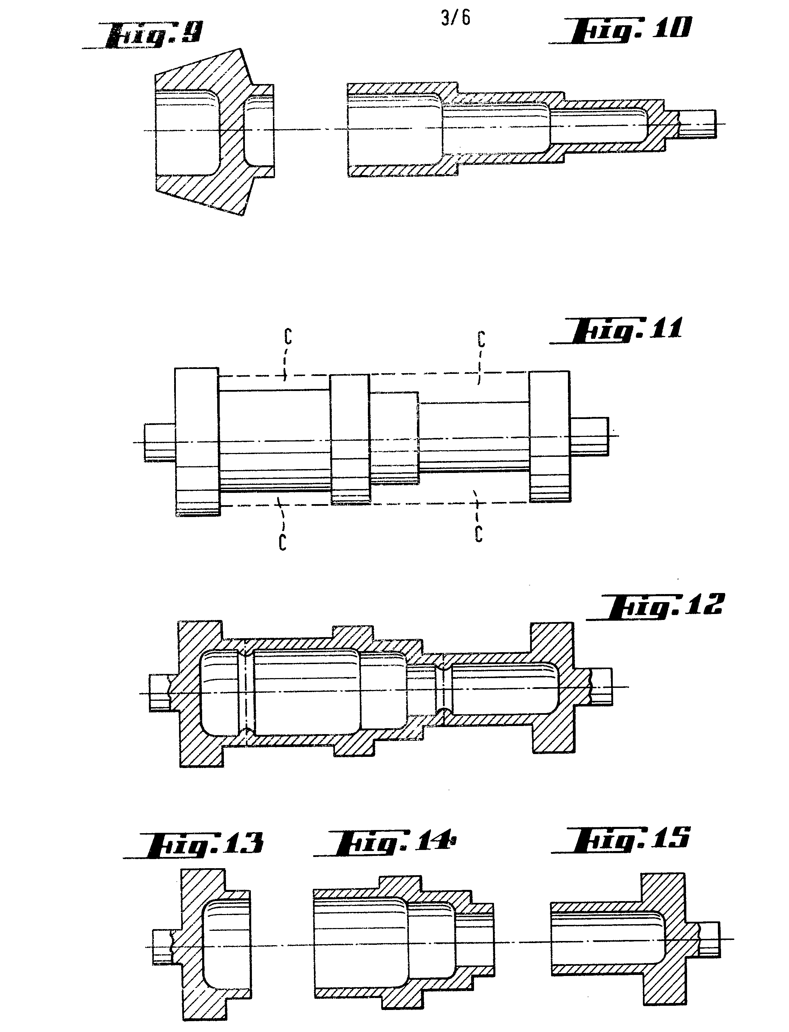

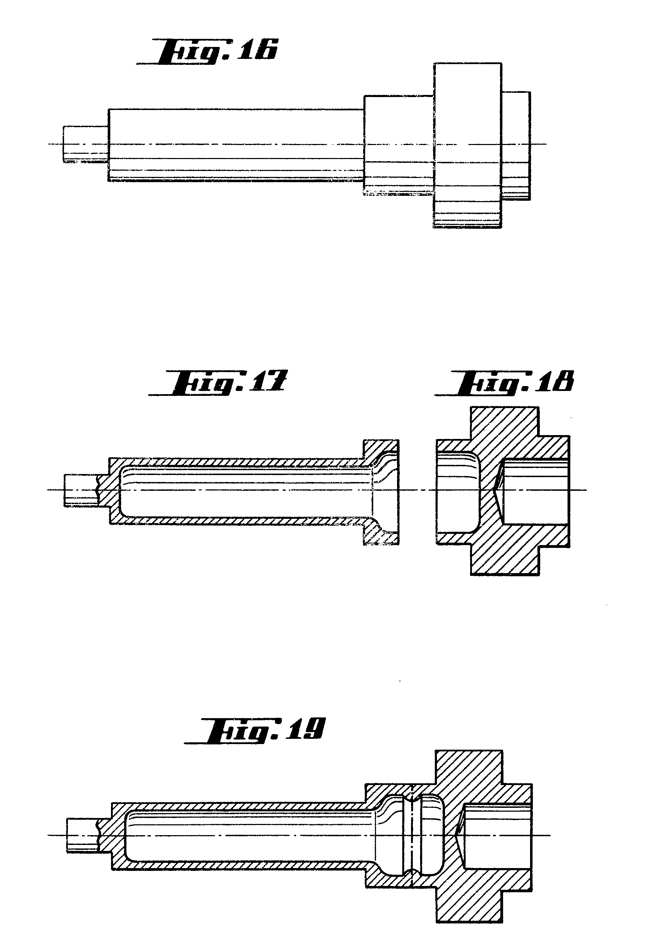

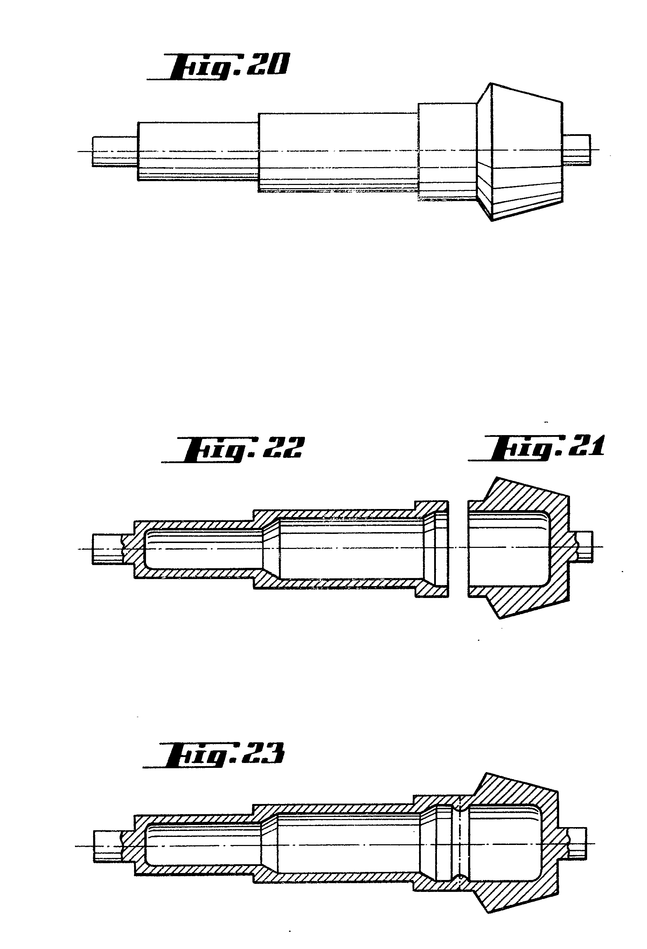

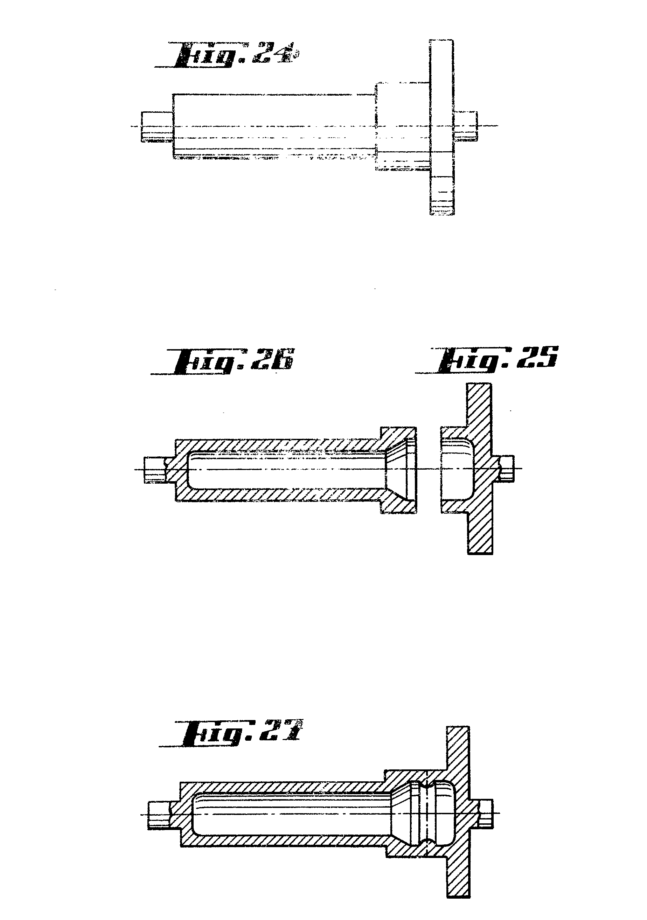

Die Fig. 5 bis 27 zeigen weitere Formbeispiele von Hohlwellenausführungen.

## Patentanspruch

Verfahren zur Herstellung einer rotationssymmetrischen Hohlwelle, aus mindestens zwei im Kaltfliesspressverfahren hergestellten Wellenteilen, die miteinander in Bereichen konstanter Wellendurchmesser durch Schweissen verbunden werden, dadurch gekennzeichnet, dass die die beiden Wellenenden bildenden Teile als einseitig geschlossene Fliesspressteile hergestellt werden, dass wenigstens ein Wellenteil im Durchmesser abgestuft ist, dass die Hohlraumbegrenzung im wesentlichen der Aussenbegrenzung folgt, dass die Schweissung in Bereichen möglichst grösster Wellendurchmesser erfolgt, und dass die Schweissung im Reibschweissverfahren hergestellt wird, so dass sich ein allseitig abgedichteter, zusammenhängender Hohlraum ergibt.

## Revendication

Procédé pour fabriquer un arbre creux à symétries d'arbre réalisées par extrusion à froid, qui sont reliées l'une à l'autre par soudage dans les zones où le diamètre de l'arbre est le même, caractérisé en ce que les parties forment les deux extrémités de l'arbre sont réalisées sous forme de pièces extrudées fermées sur un côté, en ce qu'au moins une partie de l'arbre a un diamètre allant en diminuant par gradins, en ce que la limite de l'espace creux est effectué dans les zones où le diamètre de l'arbre est le plus important possible et en ce que le soudage est réalisé par friction, ce qui donne un arbre creux cohérant et étanche dans toutes ses parties.

## Claim

A method of producing an axially symmetrical hollow shaft consisting of at least two shaft parts produced by cold-extrusion and linked together by welding in ranges of regular shaft diameters, characterized in that both parts forming the end parts of the shaft are produced as extruded parts which are closed at one end, in that at least one shaft part contains graduable diameters, in that the interior limitation of the hollow space is mostly formed according to the exterior limitation, which is welded in the largest possible diameters of the shaft and thus realising friction-welding, so that a completely leakproof coherent hollow space is realised.

**Fig. 1**

**Fig. 2**

**Fig. 3**

**Fig. 4**

Fig. 5

Fig. 6

C

C

Fig. 7

Fig. 8

**Fig. 9**

**Fig. 10**

**Fig. 11**

C          C

C          C

**Fig. 12**

**Fig. 13**   **Fig. 14**   **Fig. 15**

**Fig. 16**

**Fig. 17**

**Fig. 18**

**Fig. 19**

Fig. 20

Fig. 22

Fig. 21

Fig. 23

Fig. 24

Fig. 26

Fig. 25

Fig. 27